# EUROPÄISCHE PATENTSCHRIFT

(11) **EP 3 214 949 B1**
(45) Veröffentlichungstag und Bekanntmachung des Hinweises auf die Patenterteilung: **31.12.2025**
(21) Anmeldenummer: 15804687.0
(22) Anmeldetag: 09.11.2015
(51) Int. Cl.: A23L 13/60, A23L 11/00, A23L 19/12, A23L 29/219

(54) **VERWENDUNG VON ALPHA-CYCLODEXTRIN BEI DER HERSTELLUNG VON LEBENSMITTELN**
USE OF ALPHA-CYCLODEXTRIN IN THE PRODUCTION OF FOOD
UTILISATION DE L'ALPHA-CYCLODEXTRINE DANS LA PRODUCTION D'ALIMENTS

(30) Priorität: 07.11.2014 DE 102014016378
(43) Veröffentlichungstag der Anmeldung: 13.09.2017
(73) Patentinhaber: world wide WIBERG GmbH, 5020 Salzburg (AT)
(72) Erfinder: BAJOVIC, Bajo, 49082 Osnabrück (DE); STEINRIEDE, Dirk, 49401 Damme-Osterfeine (DE); BÜHR, Patrick, 48151 Münster (DE)
(74) Vertreter: Schneiders & Behrendt Bochum
(86) Internationale Anmeldenummer: PCT/EP2015/076061
(87) Internationale Veröffentlichungsnummer: WO 2016/071532

(56) Entgegenhaltungen:
- WO-A1-2014/121141
- JP-A- 2014 128 233
- US-A1- 2004 161 526
- US-A1- 2006 088 648

## Beschreibung

Die Erfindung betrifft die Verwendung von α-Cyclodextrin als Emulgator und Verdickungsmittel bei der Herstellung von streichfähigen und schnittfesten Lebensmitteln.

Cyclodextrine sind ungiftige cyclische Polysaccharide mit mehreren Glukoseeinheiten. Sie sind in Wasser mehr oder weniger löslich und bilden mit Fremdmolekülen, die größenmäßig in den Cyclodextrinring hineinpassen, Inklusionskomplexe. Technisch genutzt werden Cyclodextrine beispielsweise in Textilien für die Schweißadsorption, zur Bindung von Gerüchen, zur Einlagerung und definierten Abgabe von Wirkstoffen und in der Lebensmittel- und Kosmetikindustrie zur Stabilisierung von Geschmacks- und Geruchsstoffen sowie für die Konservierung.

α-Cyclodextrin besteht aus sechs ringförmig angeordneten Glukoseeinheiten. Es ist gut wasserlöslich (14,5 g/100ml bei Raumtemperatur), ist recht hitzebeständig und geeignet, Einschlussverbindungen in wässrige Lösung zu bringen. In der Lebensmittelindustrie wird es zur Beeinflussung und Modifizierung von Geruch und Geschmack, wie zur Stabilisierung und Konservierung eingesetzt. Beispielsweise können Lebensmitteln mit Hilfe von α-Cyclodextrin Geschmacksstoffe entzogen werden, etwa Bitterstoffe.

Bei der Herstellung von streichfähigen und schnittfesten Lebensmitteln, sowohl auf pflanzlicher, als auch auf tierischer Basis, ist die Herstellung stabiler Emulsionen und die Einstellung der richtigen Konsistenz essentiell und ein ständiges Problem. Insbesondere Lebensmittel, die neben Öl- und/oder Fettbestandteilen Wasser enthalten, neigen bei längerer Aufbewahrung zur Separierung. Die Aufbewahrung im Kühlschrank und wechselnde Temperaturregime sind geeignet, solche Separierungserscheinungen zu fördern. Es besteht daher ein Bedarf an Lebensmittelzusätzen, die zur Stabilisierung solcher Emulsionen und zur Einstellung der richtigen Konsistenz herangezogen werden können.

Herkömmlich Emulgatoren, die vielfach in Lebensmitteln eingesetzt werden, sind Proteine, etwa Lezithin und Casein, aber auch Glyceride, Phospate, etc. Viele der herkömmlichen Emulgatoren nehmen einen erheblichen Einfluss auf den Geschmack, sind selbst "Nahrungsmittel" in dem Sinne, dass sie neben der erwünschten emulgierenden Wirkung gleichzeitig einen Nährwert haben und sind häufig nicht geeignet, die Stabilität und Haltbarkeit des Lebensmittels über längere Zeit aufrecht zu erhalten. Es besteht daher ein Bedarf an Zutaten, die lebensmittelrechtlich und physiologisch unbedenklich sind, vom Körper nicht verstoffwechselt werden und gleichzeitig die erwünschte Wirkung auf das jeweilige Lebensmittel - hier in streichfähiger Form - ausüben. Herkömmliche Emulgatoren und Verdickungsmittel sind deklarierungsbedürftige Zusatzstoffe, die beim Verbraucher häufig auf Bedenken stoßen und die es zu ersetzen gilt.

Bei der Herstellung von Brotaufstrichen, sowohl auf pflanzlicher als auch auf tierischer Basis, kommt es zudem darauf an, den fein zerteilten Bestandteilen die richtige Konsistenz verleihen. Herkömmlicherweise erfolgt dies durch eine geeignete Einstellung der Teilchengröße in Verbindung mit der Zugabe von Verdickungsmitteln. Da die Auswahl der Bestandteile großen Einfluss auf das Mundgefühl, die Streichfähigkeit und die Konsistenz des Produkts haben, ist die Zahl der Freiheitsgrade beschränkt. Auch hier gilt es, Zutaten zu finden, mit denen die Spannweite der Produkte erweitert werden kann.

Die Pressemitteilung BoXED 466 973 der Wacker Chemie AG beschreibt die Stabilisierung von Öl-in-Wasser-Emulsionen mithilfe von alpha-Cyclodextrin. Als Beispiel wird die Verwendung in Salatssoßen, Mayonnaise, Dessertcreme und Margarine angegeben. Eine Anwendung dieses Prinzips auf die Stabilisierung von proteinhaltigen Lebensmitteln ist der Pressemitteilung nicht zu entnehmen.

Es wurde gefunden, dass die Verwendung von α-Cyclodextrin diese Probleme löst. Lebensmittel, die Öl und/oder Fett einerseits und Wasser andererseits in einem Gewichtsverhältnis von 1:10 bis 10:1 enthalten, können mit einer Menge von 4 bis 7 Gew.-% α-Cyclodextrin, bezogen auf das fertige Lebensmittel, stabilisiert werden. Es ergibt sich eine stabile Emulsion des Öl/Fett-Bestandteils in Wasser (oder von Wasser in Fett/Öl) und eine gleichmäßige Verteilung sonstiger Zusatzstoffe in dieser Matrix. Die Konsistenz kann in weiten Bereichen über die Menge an α-Cyclodextrin eingestellt werden, je höher der Anteil an Cyclodextrin ist, desto höher ist die Viskosität des Produkts. Das Lebensmittel enthält neben dem α-Cyclodextrin 10 bis 45 Gew.-% Öl und/oder Fett, Wasser, Protein sowie Salz, Gewürze und Aromen.

Der Wassergehalt liegt in der Regel bei 30 bis 70 Gew.-%, der Proteingehalt bei 5 bis 15 Gew.-%.

In dem Lebensmittel liegt das Gewichtsverhältnis von Öl/Fett zu Wasser vorzugsweise im Bereich von 3:7 bis 7:3.

Als Öle und Fette kommen alle im Lebensmittelbereich übliche pflanzliche und tierische Öle und Fette in Frage, sowohl in flüssiger als auch in fein zerteilter fester Form.

Einerseits handelt es sich bei dem Lebensmittel um ein streichfähiges oder schnittfestes Produkt, bei dem bereits gegarte Wurst- und Fleischerzeugnisse eingesetzt werden.

Andererseits handelt es sich bei dem Lebensmittel um ein vorzugsweisevegetarisches oder veganes Produkt, das pflanzliche Öle oder Fette und pflanzliches Protein enthält. Bei den Proteinen kommen insbesondere Kartoffel- und Erbsenprotein in Frage wie auch solche, die in der Lebensmittelindustrie als Fleischersatz verwandt werden, etwa Sojaprotein, Lupinenprotein und Seitan (Weizenprotein).

Das im Lebensmittel verwandte pflanzliche Protein wurde zuvor denaturiert. Es handelt sich dabei um auf übliche Art und Weise aus den pflanzlichen Ausgangsmaterialien gewonnenes Protein, zumeist in Pulverform. Das Protein kann gegart oder hydrolysiert sein.

Pflanzliche Proteine, zumal wenn sie denaturiert sind, verfügen in der Regel nicht mehr über das Vermögen, in einer Mischung emulgierend oder verdickend zu wirken. Diese fehlende Funktionalität wird erfindungsgemäß durch den Zusatz von α-Cyclodextrin ausgeglichen.

Neben Ölen und Fetten und Protein, kann das Lebensmittel weitere tierische und pflanzliche Bestandteile enthalten. Hierbei kann es sich beispielsweise um Milchprodukte handeln, beispielsweise Sahne. Bei den weiteren pflanzlichen Bestandteilen kommen beispielsweise geschmacksgebende Zusätze in Frage, etwa Pilze, Paprika, Zwiebeln sowie Gemüse, wie sie vielfach in Brotaufstrichen und -belägen eingesetzt werden. Ferner können pflanzliche Aromastoffe, etwa Pilzaroma, zugesetzt werden.

Das Lebensmittel kann zusätzlich zum α-Cyclodextrin weitere Ballaststoffe enthalten, wie sie üblicherweise in Lebensmitteln eingesetzt werden. Dazu zählen beispielsweise pflanzliche Fasern, Oligofructose, Cellulosen, Fructane (Inulin) und dergleichen.

Selbstverständlich enthalten die Lebensmittel eine übliche Menge an Salz, Gewürzen und Aromen, etwa in einer Menge von 1 bis 7 Gew.-%, bezogen auf das fertige Lebensmittel. Die Zugabe weiterer üblicher funktioneller Zutaten ist ohne weiteres möglich.

Bei dem Lebensmittel handelt es sich insbesondere um Brotaufstriche und Aufschnitt.

Die erfindungsgemäß stabilisierten Lebensmittel werden in der Regel nach der Herstellung erhitzt, auch aus hygienischen Gründen. Viele Lebensmittel, die aus mehreren Komponenten zusammengesetzt sind, insbesondere auch solche, die Proteine enthalten, verändern durch das Erhitzen ihre Textur und Konsistenz. Die Stabilisierung durch α-Cyclodextrin hat sich in dieser Hinsicht als außerordentlich vorteilhaft erwiesen, da nach dem Erhitzen keinerlei Änderung in Textur und Konsistenz eintritt.

Die Verwendung von α-Cyclodextrin hat den Vorteil, dass neben einer hervorragenden emulgierenden und verdickenden Wirkung eine hohe Stabilität des Produkts erreicht werden kann. α-Cyclodextrin nimmt praktisch keinen Einfluss auf den Geschmack, ist physiologisch unbedenklich und wird darüber hinaus nicht verstoffwechselt, d. h. gilt als Ballaststoff. Der Gehalt an löslicher Faser kann zusätzlich durch übliche Ballaststoffe, etwa Oligofructose, Cellulose oder Cellulosederivate erhöht werden.

α-Cyclodextrin hat zudem einen positiven Einfluss auf den Blutzuckergehalt und ist geeignet, dessen Spitzenwerte abzusenken. Auf diesen Effekt darf werbemäßig im Rahmen eines "health claim" hingewiesen werden.

Es versteht sich, dass alle Komponenten des Lebensmittels in fein verteilter Form vorliegen, wie sie üblicherweise durch Verwendung eines Kutters erzielt werden kann. Die Stabilität und Viskosität des Produkts kann durch intensives Mischen unter hoher Scherwirkung gesteuert werden.

Die Erfindung wird durch die nachfolgenden Beispiele näher erläutert:

### Beispiel 1

### Brotaufstrich mit gegarten Fleisch- und Wurstwaren

6,5 kg Kochschinkenabschnitte wurden in einem Kutter fein zerkleinert. 500 g einer Mischung aus 85 % α-Cyclodextrin und 15% Oligofructose wurden in 1 I kaltem Wasser gelöst und mit 50 g einer Gewürzmischung versetzt. In den Kutter wurden zu der Fleischmasse 2 kg Sonnenblumenöl gegeben und gründlich eingemischt. Anschließend wurde die Masse mit dem vorgelösten α-Cyclodextrin versetzt. Die Mischung wurde im Kutter bei hoher Geschwindigkeit zu der fertigen Creme verarbeitet, die in Därme oder Gefäße abgefüllt wurde und anschließend bis auf eine Kerntemperatur von 72°C gegart wurde.

### Beispiel 2

### Veganer Aufstrich

Ein veganer Aufstrich wird nach Beispiel 1 aus 3,8 kg Sonnenblumenöl, 5,5 kg Wasser, 700 g Erbsenprotein, 600 g einer Mischung aus 85 % α-Cyclodextrin und 15 % Oligofructose und 200 g Gewürzmischung unter Eiskühlung hergestellt.

Die Cremigkeit des streichfähigen Produkts kann zum einen über den Anteil an α-Cyclodextrin und das Verhältnis von Wasser zu Öl/Fett eingestellt werden, zum anderen durch die Dauer und Geschwindigkeit des Kutterprozesses.

### Beispiel 3

### Fleischpaté

Eine Paté/Creme auf Basis von Brühwurst wurde wie folgt hergestellt: 600 g Brühwurst mit einem Fettgehalt von 30 Gew.-% und Proteingehalt 10 bis 12 Gew.-%, 260 g Sonnenblumenöl und 100 g Wasser 40 g α-Cyclodextrin wurden nacheinander in einen Kutter gegeben und bis zur gewünschten Konsistenz unter Kühlung bei hoher Geschwindigkeit verarbeitet. Es ergab sich eine streichfähige Masse mit cremiger Konsistenz. Nach dem Garen bei 72° C ergab sich ein Produkt mit ausgeprägter Streichfähigkeit und dem Mundgefühl einer Fleischpaté.

### Beispiel 4

### Schinkenpaté

Analog zu Beispiel 3 wurden 600 g Kochschinken mit einem Fettgehalt von 3 Gew.-% und Proteingehalt von 20 Gew.-%, 225 g Sonnenblumenöl und 125 g Wasser mit 50 g α-Cyclodextrin in einem Kutter unter Eiskühlung intensiv vermischt. Es wurde ein cremiges Produkt erhalten, das seine Textur und Konsistenz auch nach dem Erhitzen auf 72° C beibehielt.

### Beispiel 5

### Veganer Aufstrich vom Typ Streichwurst

Analog zu Beispiel 2 wurde ein veganer Aufstrich vom Leberwursttyp aus 70 g Pflanzeneiweiß mit einem Eiweißgehalt von 75 bis 95 Gew.-%, 380 g Sonnenblumenöl, 50 g einer Gewürzmischung und 500 g Wasser mit 50 g α-Cyclodextrin in einem Kutter unter Kühlung bei hoher Drehzahl hergestellt. Nach dem Abfüllen in Därme wurde das Produkt gegart und ergab eine Streichwurst mit einem guten Mundgefühl, cremiger Konsistenz und annehmbarem Geschmack.

## Patentansprüche

1. Verwendung von α-Cyclodextrin als Emulgator und Verdickungsmittel bei der Herstellung von streichfähigen und schnittfesten Lebensmitteln, die Öl und/oder Fett einerseits und Wasser andererseits enthalten, wobei das Lebensmittel, bezogen auf das Gewicht, 10 bis 45 Gew.-% Öl und/oder Fett, Wasser, 4 bis 7 Gew.-% α-Cyclodextrin und Protein enthält, Öl und/oder Fett einerseits und Wasser andererseits in einem Gewichtsverhältnis von 1:10 bis 10:1 vorliegen, und wobei das im Lebensmittel verwandte Protein, ein pflanzliches Protein ist, das zuvor durch Garen oder Hydrolysieren denaturiert wurde.

2. Verwendung von α-Cyclodextrin als Emulgator und Verdickungsmittel bei der Herstellung von streichfähigen und schnittfesten Lebensmitteln, die Öl und/oder Fett einerseits und Wasser andererseits enthalten, wobei das Lebensmittel, bezogen auf das Gewicht, 10 bis 45 Gew.-% Öl und/oder Fett, Wasser, 4 bis 7 Gew.-% α-Cyclodextrin und Protein enthält, Öl und/oder Fett einerseits und Wasser andererseits in einem Gewichtsverhältnis von 1:10 bis 10:1 vorliegen, und wobei im Lebensmittel bereits gegarte Wurst- und Fleischerzeugnisse verwandt werden.

3. Verwendung nach Anspruch 1 oder 2, **dadurch gekennzeichnet, dass** das Gewichtsverhältnis von Öl und/oder Fett zu Wasser 3:7 bis 7:3 beträgt.

4. Verwendung nach Anspruch 1, 2 oder 3, **dadurch gekennzeichnet, dass** Fette und/oder Öle pflanzliche Fette und/oder Öle sind.

5. Verwendung nach einem der Ansprüche 1 bis 4, **dadurch gekennzeichnet, dass** das Lebensmittel 5 bis 15 Gew.-% Protein enthält.

6. Verwendung nach Anspruch 1, **dadurch gekennzeichnet, dass** das Protein Kartoffel-, Erbsen-oder Sojaprotein ist.

7. Verwendung nach einem der vorstehenden Ansprüche, **dadurch gekennzeichnet, dass** das Protein als Konzentrat oder Isolat in getrockneter Form vorliegt.

8. Verwendung nach einem der vorstehenden Ansprüche, **dadurch gekennzeichnet, dass** das Lebensmittel weitere Ballaststoffe enthält.

9. Verwendung nach Anspruch 8, **dadurch gekennzeichnet, dass** als weitere Ballaststoffe Oligofructose, Cellulose und/oder ein Cellulosederivat verwandt werden.

10. Verwendung nach einem der vorstehenden Ansprüche in einem erhitzten oder gegarten Lebensmittel.

11. Verwendung nach einem der Ansprüche 1 oder 3 bis 10, **dadurch gekennzeichnet, dass** das Lebensmittel ein vegetarisches oder veganes Lebensmittel ist.

12. Verwendung nach einem der vorstehenden Ansprüche, **dadurch gekennzeichnet, dass** das Lebensmittel 1 bis 7 Gew.-% Salz, Gewürze und Aromen enthält.

## Claims

1. Use of α-cyclodextrin as an emulsifier and thickening agent in the production of spreadable foodstuffs containing oil and/or fat on the one hand and water on the other, wherein the food contains, based on weight, 10 to 45 wt. oil and/or fat, water, 4 to 7 wt% α-cyclodextrin and protein, oil and/or fat on the one hand and water on the other hand being present in a weight ratio of 1:10 to 10:1, and wherein the protein used in the foodstuff is a vegetable protein that has been previously denatured by cooking or hydrolysis.

2. Use of α-cyclodextrin as an emulsifier and thickening agent in the production of spreadable foodstuffs containing oil and/or fat on the one hand and water on the other, wherein the food contains, based on weight, 10 to 45 wt. oil and/or fat, water, 4 to 7 wt% α-cyclodextrin and protein, the oil and/or fat on the one hand and the water on the other hand being present in a weight ratio of 1:10 to 10:1, and wherein cooked sausage and meat products are used in the foodstuff.

3. Use according to claim 1 or 2, **characterized in that** the weight ratio of oil and/or fat to water is 3:7 to 7:3.

4. Use according to claim 1, 2, or 3, **characterized in that** fats and/or oils are vegetable fats and/or oils.

5. Use according to any one of claims 1 to 4, **characterized in that** the food contains 5 to 15 wt% protein.

6. Use according to claim 1, **characterized in that** the protein is potato, pea, or soy protein.

7. Use according to any one of the preceding claims, **characterized in that** the protein is present as a concentrate or isolate in dried form.

8. Use according to any one of the preceding claims, **characterized in that** the foodstuff contains further dietary fiber.

9. Use according to claim 8, **characterized in that** oligofructose, cellulose, and/or a cellulose derivative are used as further dietary fibers.

10. Use according to any one of the preceding claims in a heated or cooked food product.

11. Use according to any one of claims 1 or 3 to 10, **characterized in that** the foodstuff is a vegetarian or vegan foodstuff.

12. Use according to any of the preceding claims, **characterized in that** the food contains 1 to 7 wt% salt, spices, and flavorings.

## Revendications

1. Utilisation de l'α-cyclodextrine en tant qu'émulsifiant et épaississant dans la fabrication de produits alimentaires tartinables et fermes, qui contiennent de l'huile et/ou des matières grasses d'une part et de l'eau d'autre part, dans laquelle le produit alimentaire contient, par rapport à son poids, 10 à 45 % en poids d'huile et/ou de matières grasses, 4 à 7 % en poids d'α-cyclodextrine et de protéines, l'huile et/ou les matières grasses d'une part et l'eau d'autre part étant présents selon un rapport de poids de 1:10 à 10:1, et les protéines utilisées dans le produit alimentaire étant des protéines végétales, qui ont été dénaturées au préalable par la cuisson ou l'hydrolysation.

2. Utilisation de l'α-cyclodextrine en tant qu'émulsifiant et épaississant dans la fabrication de produits alimentaires tartinables et fermes, qui contiennent de l'huile et/ou des matières grasses d'une part et de l'eau d'autre part, dans laquelle le produit alimentaire contient, par rapport à son poids, 10 à 45 % en poids d'huile et/ou de matières grasses, d'eau, 4 à 7 % en poids d'α-cyclodextrine et de protéines, l'huile et/ou les matières grasses d'une part et l'eau d'autre part étant présents selon un rapport de poids de 1:10 à 10:1, et dans laquelle des produits à base de charcuterie et de viande déjà cuits ont été utilisés dans le produit alimentaire.

3. Utilisation selon la revendication 1 ou 2, **caractérisée en ce que** le rapport de poids entre l'huile et/ou les matières grasses et l'eau va de 3:7 à 7:3.

4. Utilisation selon la revendication 1, 2 ou 3, **caractérisée en ce que** les matières grasses et/ou les huiles sont des matières grasses et/ou des huiles végétales.

5. Utilisation selon l'une des revendications 1 à 4, **caractérisée en ce que** le produit alimentaire contient 5 à 15 % en poids de protéines.

6. Utilisation selon la revendication 1, **caractérisée en ce que** les protéines sont des protéines de pomme de terre, de pois ou de soja.

7. Utilisation selon l'une quelconque des revendications précédentes, **caractérisée en ce que** les protéines sont présentes sous la forme d'un concentré ou d'un isolat sous une forme sèche.

8. Utilisation selon l'une quelconque des revendications précédentes, **caractérisée en ce que** le produit alimentaire contient d'autres fibres alimentaires.

9. Utilisation selon la revendication 8, **caractérisée en ce que** sont utilisés comme autres fibres alimentaires de l'oligofructose, de la cellulose et/ou un dérivé de cellulose.

10. Utilisation selon l'une des revendications précédentes dans un produit alimentaire réchauffé ou cuit.

11. Utilisation selon l'une des revendications 1 ou 3 à 10, **caractérisée en ce que** le produit alimentaire est un produit végétarien ou végétalien.

12. Utilisation selon l'une des revendications précédentes,
**caractérisée en ce que** le produit alimentaire contient 1 à 7 % en poids de sel, de condiments et d'arômes.
